# EUROPEAN PATENT SPECIFICATION

(11) **EP 1 887 339 B1**
(45) Date of publication and mention of the grant of the patent: **20.01.2010**
(21) Application number: 06016650.1
(22) Date of filing: 09.08.2006
(51) Int. Cl.: G01M 11/02, G01B 11/25

(54) **System and method for evaluating a lens for an electronic device**
System und Verfahren zur Bewertung einer Linse für ein elektronisches Gerät
Système et procédé d'évaluation d'une lentille pour un appareil électronique

(43) Date of publication of application: 13.02.2008
(73) Proprietor: Research In Motion Limited, Waterloo, Ontario N2L 3W8 (CA)
(72) Inventor: Rooke, David John, Waterloo Ontario N2V 2N5 (CA)
(74) Representative: Moore, Barry

(56) References cited:
- EP-A2- 1 061 329
- US-A- 5 812 260
- US-A- 5 847 822
- US-A1- 2002 071 111
- US-B1- 6 195 164

## Description

The invention generally relates to a method, device and system for evaluating a lens for a display in an electronic device, in particular a display lens of a communication device, such as a portable phone.

A typical voice communication device, such as a cellular phone, has a display therein, which is frequently a liquid crystal display (LCD). As is known in the art, an LCD is comprised of a liquid crystal substance sandwiched between an upper and lower plate of generally thin glass.

The layout of a display in a communication device frequently has a lens provided over the LCD. The lens provides a physical cover for the upper plate of glass of the top of the LCD itself. The lens can be thicker than LCD's glass top, thereby providing protection from when external downward pressure applied to the upper surface of the LCD.

However, the lens introduces additional visual interface between the LCD and the viewer. This can lead to distortions to the LCD if there are optic defects in the lens. As the lens is typically clear, it is difficult to determine when a lens is defective, until it is installed into a device and the LCD is activated. This is inefficient for the manufacturing process.

US-A-2002/0071111 discloses a system for automatically measuring the optical power at different points on a multifocal spectacle lens by capturing a digital image of a pattern of concentric circles printed on paper viewed through the lens. The captured digital image is then digitally processed and compared to the recorded data from a master lens to determine the optical power of the spectacle lens.

US-A-5812260 discloses a system for measuring optical distortion in a vehicle windscreen, by using a camera to view a square grid pattern through the windscreen from two different angles and digitally capturing the resulting images. The captured image signals are then digitally processed and compared with stored signals. The results of this comparison are further digitally processed to generate a numerical indication of the degree of distortion of the windscreen. This numerical indication is compared to a threshold and the comparison used to generate a result indicating whether the windscreen is acceptable or not.

EP-A-1061329 discloses a system for measuring optical properties, such as the power, of an ophthalmic element by illuminating a reference pattern on a glass diffusing plate using a monochromatic light source and using a detector camera and a frame grabber to form a digital image of the reference pattern seen through the ophthalmic element. The digital image is then digitally processed to identify changes in the reference pattern caused by the ophthalmic element and generate a power map showing the optical power of different parts of the ophthalmic element.

US-B-6195164 discloses a system for calibrating a laser ablation system in which a plastic test material is ablated to form a lens shaped test surface and the optical power and shape of the test surface is then measured to assess the operation of the laser ablation system. The shape of the ablated test surface is measured by passing light from a light source through a reference structure to create a geometrical pattern of light rays which passes through the ablated test surface. The pattern resulting from the geometrical pattern of light rays passing through the ablated test surface is viewed through a microscope or digitally imaged by a light detector, frame grabber and computer. The digital image is then digitally processed to identify changes in the geometry of the geometrical pattern, for example changes in the spacing of the elements of the geometric pattern, and to use the identified changes to calculate the optical power of the ablated test surface.

US-A-5847822 discloses an optical element inspection apparatus in which an optical element is illuminated by light shone through a diffuser and an interception plate bearing a pattern and located at the focal point of the optical element. The light which has passed through the optical element is received by an image pickup element such as a CCD sensor and displayed on a CRT display. Where the focal length of the optical element is correct the displayed image has a uniform brightness and where there are defects in the optical element the displayed image will be non-uniform. The type of defect can be deduced from the appearance of the displayed image.

There is a need for a system and method to evaluate such lenses prior to installation to a device which provides an improvement over the prior art and the viewer.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Fig. 1 is a top plan view of a communication device having a liquid crystal display (LCD) and a lens that may be evaluated according to embodiment of the invention;

Fig. 2 is a top exploded perspective view of selected internal components including the LCD display and the lens of the communication device of Fig. 1;

Fig. 3 is a schematic diagram of an evaluation grid used to evaluate the lens of the device of Fig. 1 according to an embodiment;

Fig. 4A is a schematic of an exemplary distortion pattern seen through a lens having a defect when the grid of Fig. 3 is placed underneath;

Fig. 4B is another schematic of an exemplary distortion pattern seen through a lens having a defect when the grid of Fig. 3 is placed underneath; and

Fig. 5 is a block diagram of an evaluation system utilizing the grid of Fig. 3 for evaluating a lens of the device of Fig. 1 according to an embodiment.

### DESCRIPTION OF PREFERRRED EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

A first aspect of an embodiment provides, an evaluation system for visually identifying imperfections of components of an electronic device, said evaluation system comprising: an evaluation device comprising: a substrate being one of a clear mylar sheet, a rigid piece of glass, or a clear or bright piece of plastic; and a pattern imposed on the substrate, said pattern appearing to be a grey background on the substrate when viewed with an unaided eye or through said lens when no noteable imperfection exists in said lens and appearing to be a moire distortion pattern when viewed through said lens when said lens is defective, and said pattern being one of: a series of lines shown in a dark colour, said lines being approximately 50 microns thick, spaced in approximately 100 micron intervals from center to center; a grid having lines shown in a dark colour having thickness of between approximately 10 to approximately 150 microns, spaced in intervals between approximately 20 microns to approximately 300 microns from center to center; or a series of geometric shapes, each having dimensions of between approximately 10 to approximately 150 microns; and, a lens adapted to cover a display for said electronic device, and an evaluation table for receiving said lens, said table having a mounting area for said evaluation device, said evaluation table being arranged to position said evaluation device relative to said lens to enable the substrate to be viewed through said lens, whereby, if said substrate is held relative to said lens to enable said pattern to be viewed through said lens by an evaluator, a distortion in said pattern viewed through said lens is indicative of an imperfection in said lens.

The substrate may be a sheet approximately 10cm by 16 cm.

The pattern may have exterior dimensions of approximately 9 cm by 14 cm.

The system may further comprise: a light mounted within the table to provide backlighting for the substrate; and a guide rail system for the lens to place the lens above the mounting area.

The system may further comprise a conveyor for the lens to selectively transport the lens to and from the mounting area.

A second aspect provides, a method for evaluating a lens for a display for an electronic device for imperfections through a visual inspection by an evaluator, said method comprising: placing the lens under evaluation on, or holding the lens under evaluation over, a substrate being one of a clear mylar sheet, a rigid piece of glass, or a clear or bright piece of plastic, and having a pattern imposed on the substrate; placing said substrate relative to said lens to enable said pattern to be viewed through said lens; examining an image of the pattern appearing through the lens for a distortion in said pattern; and identifying said lens as defective if said distortion is found, characterised in that: said pattern appears to be a grey background on the substrate when viewed with an unaided eye or through said lens when no noteable imperfection exists in said lens; and said distortion appears to be a moiré distortion pattern when viewed through said lens.

A third aspect provides, a method of manufacturing an electronic device having a lens for a display of the device, the method comprising: evaluating the lens using a method according to the second aspect; and if said lens is evaluated as having no imperfections, assembling said lens with said electronic device.

In other aspects, various subsets and combinations of the above noted aspects are provided.

Generally, an embodiment provides a system, method and device for evaluating a lens prior to installing the lens in an electronic device. For each, a substrate is provided having a finely impressed pattern provided thereon. When a lens is placed over the substrate, the pattern viewed through the lens can be viewed for any distortions in its image. If a significant or noticeable distortion is viewed and visually identified, then a distortion is present in the lens and it should be rejected and should not be installed into a device. Various patterns and substrates can be provided.

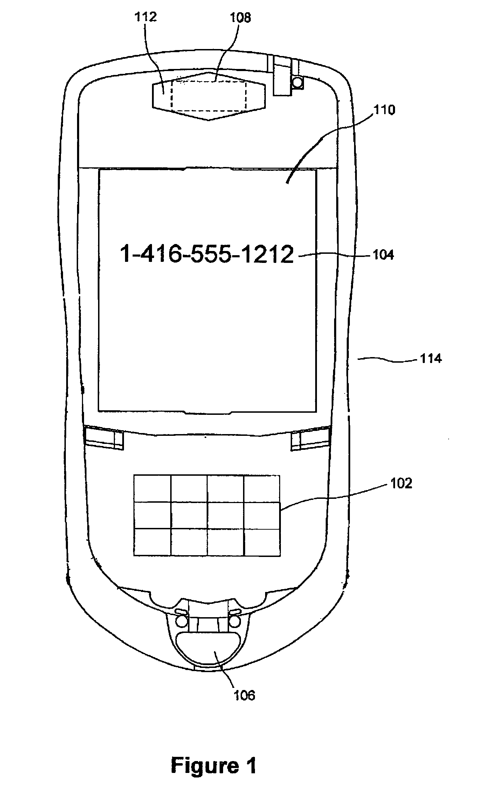

Referring to Fig. 1, communication device 100 is shown. In the embodiment, communication device 100 provides voice communications with other devices, allowing the user to hear audio signals (e.g. voices) transmitted from another device (e.g. a cellular phone). Device 100 may be a telephone, a cordless telephone, a cellular telephone, a voice-enabled personal digital assistant (PDA) or any other voice communication device. Communications may be provided via wireless systems, wired systems or a combination of both systems. As is common with voice communication devices, device 100 has a keypad 102, display 104, microphone 106 and transducer 108, i.e. speaker 108, all contained within an enclosure. Display 104 is an LCD device. Display lens 110 provides a transparent, translucent or non-opaque physical cover for the viewing area of display 104 and extends beyond it. Speaker cover 112 covers a recess in display lens 110. The recess is located above the installation location of speaker 108. Case 114 provides a physical enclosure for the electronics and mechanical elements for device 100. General internal circuits and operations of device 100 are well known in the art and are not provided here.

Device 100 provides voice communications for a user in a familiar compact form factor. To initiate a call, the user activates device 100, enters a telephone number to be called on keypad 102 and initiates the call.

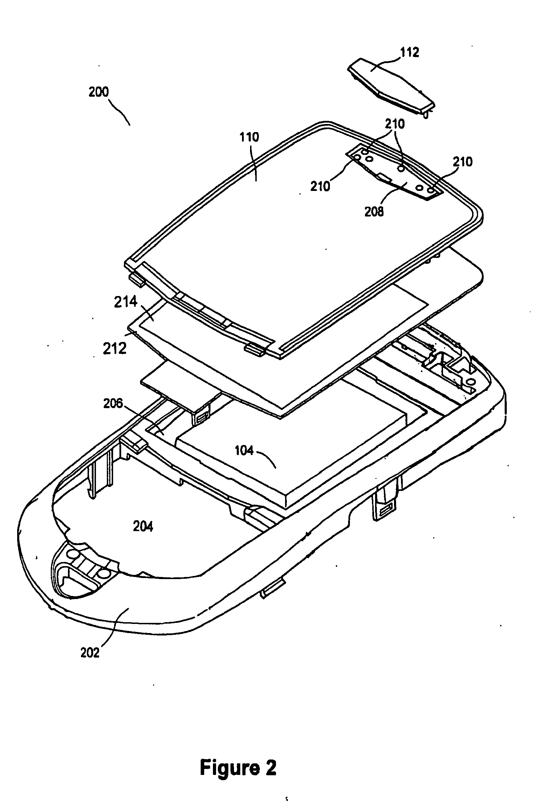

Referring to Fig. 2, view 200 provides an exploded top perspective view of internal and external elements in an upper portion of device 100. In particular, case 114 is comprised of top case section 202 and a bottom case section (not shown). Top case section 202 provides a one-piece cover for internal elements of device 100. Top case section 202 mates with the bottom case section along their respective sides. Various dimensions and fitting interfaces between top case section 202 and bottom case section may be provided in other embodiments, including those known in the art. Generally, top case section 202 is shaped to define the front face of device 100 and the top portion of the exterior edge of case 114, Top section 202 also provides internal bracing for structural support for device 100 and has two openings in its front face: opening 204 allows access to keypad 102 and opening 206 allows viewing of LCD 104. Top case section 202 is preferably a plastic moulded injected casing.

Display area of LCD 104 is covered by display lens 110. Display lens 110 further extends upwardly above LCD 104 to the top edge of case section 202. As such, display lens 110 provides a single seamless structure to cover both LCD 104 and speaker 108. Advantageously, display lens 110 may be silk screened with custom lettering or graphics around display area of LCD 104 and around the area where speaker 108 is located. Display lens 110 may be made of almost any material (such as plastic), as long as the material facilitates accurate manufacturing of display lens 110 and provides a transparent, translucent or non-opaque region where display 104 will be placed underneath. Other sizes, shapes and thicknesses of lens 110 can be provided to fit dimensions of a particular display 104.

Further detail is provided on the acoustic interface between speaker 108 and display lens 110. At a top region of display lens 110, recess 208 is provided, which is a shaped contour extending inwardly within display lens 110. In the embodiment, recess 208 is a hexagonal polygon depression having a generally stunted-hexagonal shape. The floor of recess 208 is generally flat. The exterior edges of recess 208 are bevelled downward to the floor. In other embodiments, other shapes may be provided for a recess. Recess 208 has four sound holes 210 therein which provide air conduits through display lens 110. As such, holes 210 allow passage of acoustic energy from speaker 108 through display lens 110 to the ambient environment outside device 100. Speaker cover 112 is shaped to fit within recess 208. As such in the embodiment, cover 112 is a stunted hexagonal shape. Speaker cover 112 provides a cover for sound holes 210, thereby enhancing the aesthetic appearance of display lens 110.

In order to secure display lens 110 to case section 202, adhesive display cover tape 212 is provided and is located between LCD 104 and display lens 110. Display cover tape 212 has double-sided adhesive thereon to affix its top surface to the bottom surface of display lens 110 and to affix its bottom surface to the top surface of case section 202. Display cover tape 212 is excised in area 214 so as to not obstruct view of LCD 104. For aesthetics, cover tape 212 is black, which enhances concealing of plastics elements beneath it and outlining of the display area of LCD 104. Display cover tape 212 has a transparent layer attached in area 214. After attaching tape 212 to display lens 110, the transparent layer is removed using a pull tab.

While the embodiment defines display lens 110 as being generally rectangular, in other embodiments, the display cover can be any shape and size, as long as it covers both the display region and the speaker of the communication device. Further, if the display and the speaker are not on the same face of a device, the display cover can be shaped to bend at the interface line between the two faces and cover both the display and the speaker.

In one embodiment lens 110 provides a thicker transparent or tinted window covering LCD 104. One type of lens 110 provides no visual magnification of LCD 104. In other embodiments a lens may be formed to provide magnification over one or more regions of LCD 104. Lens 110 may be manufactured from a clear polycarbonate, such as Lexan (trademark). In order to limit distortions of images as light passes from LCD 104 through lens 110 to the viewer, it is preferable that lens 110 have minimal distortions therein. However, it is inevitable that during the manufacturing or shipping of lens 110, some imperfections may be imparted onto lens 110, that will impair the clarity of lens 110. Such imperfections may not be readily visible to the unaided eye, but would be apparent once the cover is installed in situ in device 100 and when LCD 104 is generating an image. For example, a straight line generated on LCD 104 may appear bent in some regions once distorted by a defective lens 110. Alternatively or moiré effects.

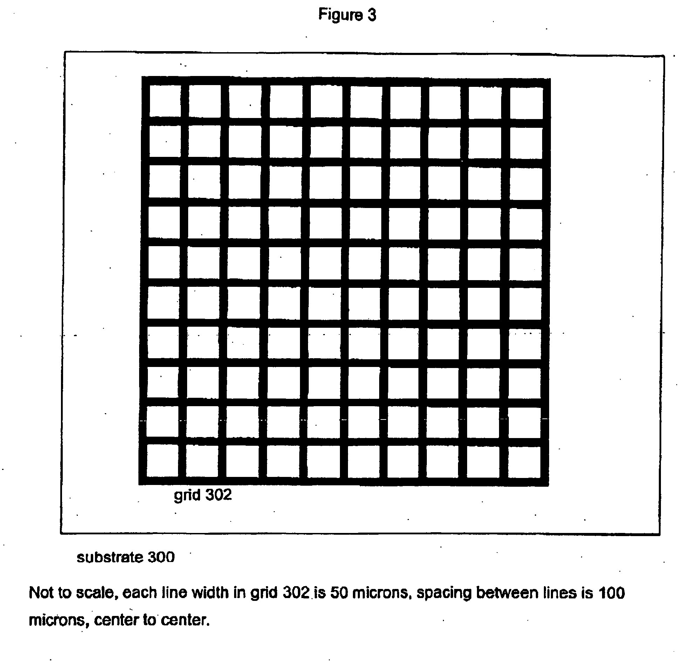

Referring to Fig. 3, to assist in evaluating lens 110 without requiring its installation into device 100, an embodiment provides a pattern 302 that is printed, etched, embossed or otherwise painted on a substrate 300 that is used to highlight an imperfection in lens 110 that would normally not be visible unless lens 110 was installed into device 100. The colour of the lines is black, however, in other embodiments, any sufficiently dark colour may be used, such as green, blue, brown or others. Substrate 300 is a clear mylar sheet; however, it can also be a bright white substrate or a rigid piece of glass or clear or bright plastic. A feature of pattern 302 as provided on the substrate is that it is visible from the background provided by the substrate. A grid may be generated using a high definition laser plotter, such as one meant for halide based film. Any suitable photolithographic high resolution process would be a possible alternative.

In the embodiment pattern 302 is a cross hatching grid of evenly spaced lines in evenly spaced rows and columns. The widths of each line is approximately 50 microns. The spacing between each line in each row and column is approximately 100 microns, center to center. As spacings of the lines in grid 302 are very close, to the unaided eye, the grid appears to be a grey background. The size of the grid can vary, depending on the size of lens 110 being evaluated. An exemplary grid has exterior dimensions of 9 cm x 14 cm centered on a clear mylar sheet 10 cm x 16 cm in size. In other embodiments, the widths may change and or the spacings may change for the lines throughout the pattern. The pattern may or may not have a symmetrical aspect to it.

Other configurations for grid 302 may be used. For example, line widths of 25 microns may be used in 25 micron spacings between exterior sides of the lines (this provides a "center-to-center" spacing of 50 microns). Similarly, line widths of 75,100, 125, 150 microns may be used ( or approximations thereof with larger or smaller dimensions allowable). For such widths, the "center to center" spacing between lines may be approximately double the thickness of the lines. This spacing provides a uniform alternation between lines and "white" spaces. The lines may be spaced in larger or smaller dimensions than their thickness. In one embodiment, all lines in grid 302 are of the same thickness and have the same spacing. In other embodiments, grid 302 may have one or more regions having different thicknesses and / or spacings of lines from other regions. Also, alternative patterns may be provided, including a pattern is a series of evenly spaced dots, forming a Benday dot arrangement, or a series of geometric shapes, such as squares, rectangles, triangles, rhombuses, circles etc. Exemplary dimensions of such geometric shapes, would be having sides in the range of 10 microns to 150 microns. Spacing of shapes would be in a similar range of dimensions.

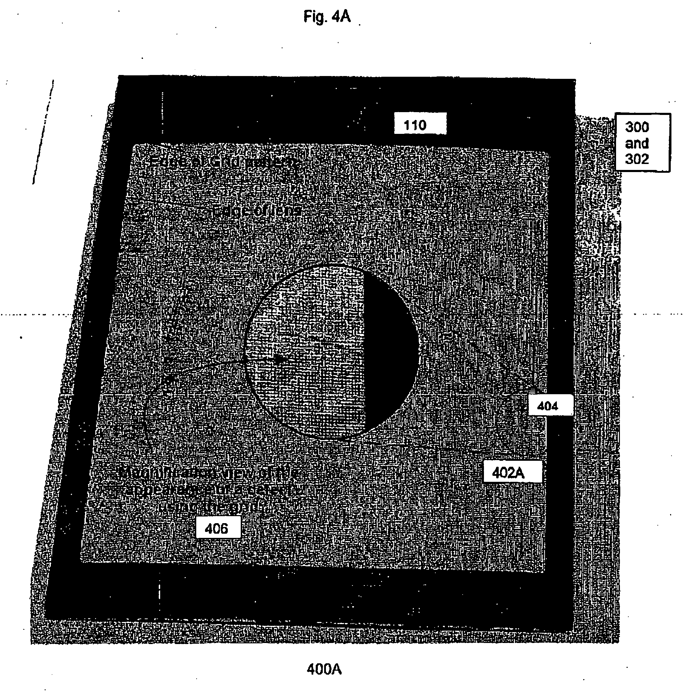

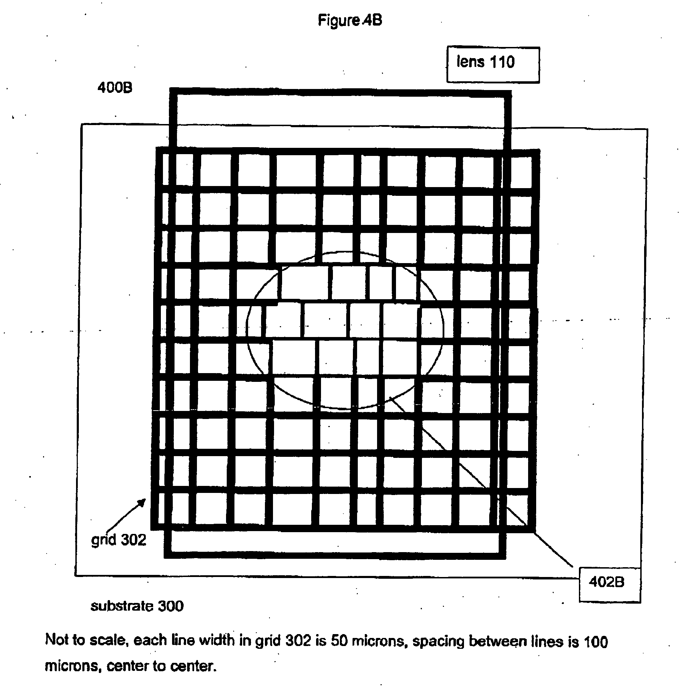

In use, a method for testing a lens as provided by an embodiment is as follows. First, substrate 300 is placed on a flat surface in a well-lit environment. Next, lens 110 is placed on top or is held slightly above substrate 300. An assessor evaluates the image of grid 302 appearing through lens 110 to evaluate the optical quality of lens 110. For an acceptable lens 110, when lens 110 is placed on top of the substrate 300 and the image of grid 302 is viewed therethrough, the image has no or only marginal distortions of the grid pattern 302. However, for a lens 110 that has an optic imperfection in an area, the imperfection is manifested by a distortion in the grey scale image of grid 302 seen through that area. An imperfection may be caused by almost any manufacturing / composition error, including a bulging of a thickness dimension in lens 110, an air bubble in lens 110, a foreign particular / substance trapped within lens 110, etc. An imperfection may produce almost any type of visible distortion in the grid image seen through lens 110. One type of distortion is that the grid pattern appears to change in the change of the colour from a constant (grey) hue to a moiré pattern. Fig 4A shows layout 400A having substrate 300 with grid 302 on a flat surface with lens 110 placed upon substrate 300. In viewing image of grid 302 in area 402A through lens 110, exemplary hairline line 404 is indicative one type of defect as magnified in balloon 406, which is provided for magnification purposes for the figure. Fig. 4B in view 400B shows another exemplary visualization of a defect of an exemplary bulging of image of grid 302 when viewed through a defective lens 110 in defective region 402B (circled for illustrative purposes). If a notable imperfection is found in the image, then the lens is rejected. If no significant imperfection is found, the lens may be accepted and eventually installed into a device. It will be appreciated that other manifestations of defects may be provided when viewing a lens.

For the method, lens 110 may be held above substrate 300 as well. If substrate 300 is transparent, then backlighting may be used, such as lighting from a light table. If substrate 300 is opaque, then ambient lighting from above lens 110 can be used.

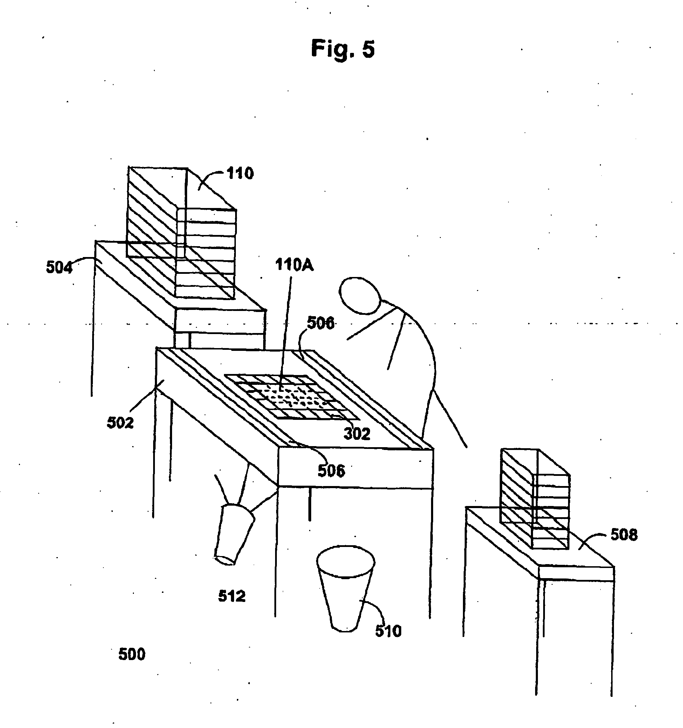

Referring to Fig. 5, in another embodiment, an automated jig and evaluation station 500 may be implemented where a light table 502 has grid 302 mounted on its upper surface. An evaluation method as described above may be used with station 500. A bin 504 of lenses 110 to be tested is provided and the evaluator can individually take a lens 110 from bin 504 and align it on table 502 over a mounting area using guide rails 506 then examine the lens under test 110A over grid 302. If the lens under test 110A does not show at least one significant distortion, change in light intensity or variability in contrast in the image of grid 302, it is considered to be a passed lens and is placed in pass bin 508 for eventual installation into a device. If the lens under test 110A shows at least one significant distortion, change in light intensity or variability in contrast in the image of grid 302, it is considered to be a failed lens and is placed in fail bin 510. Such lens would typically not be installed into a device and may be returned to the supplier. In an alternative system, an automated displacer and conveyor system may be provided to selectively automatically take a lens from bin 504 then convey it over grid 302 for evaluation then selectively place the lens under test in either bin 508 or 510 depending on the decision of the evaluator. Backlight 512 may be provided in table 502 to illuminate the mounting area and grid 302. Also, an automated computer vision system may also be provided to scan the pattern "seen" through lens 110 and assess whether the image seen through lens 110 is acceptable or not.

It will be appreciated that were dimensions are provided, they are provided as approximations and not limitation as understood to those skilled in the art, unless otherwise noted. For example, and not limitation, a range of+/- 20% or less or more may be provided to any dimension, when given as an approximation.
Although the invention has been described with reference to certain specific embodiments, various modifications thereof will be apparent to those skilled in the art without departing from the scope of the invention as outlined in the claims appended hereto.

## Claims

1. An evaluation system for visually identifying imperfections of components of an electronic device (100), said evaluation system comprising:
an evaluation device comprising:
a substrate (300) being one of a clear mylar sheet, a rigid piece of glass, or a clear or bright piece of plastic; and
a pattern (320) imposed on the substrate (300), said pattern (320) appearing to be a grey background on the substrate when viewed with an unaided eye or through said lens (110) when no noteable imperfection exists in said lens (110) and appearing to be a moiré distortion pattern when viewed through said lens (110) when said lens (110) is defective, and said pattern being one of:
a series of lines shown in a dark colour; said lines being approximately 50 microns thick, spaced in approximately 100 micron intervals from center to center,
a grid having lines shown in a dark colour having thickness of between approximately 10 to approximately 150 microns, spaced in intervals between approximately 20 microns to approximately 300 microns from center to center; or
a series of geometric shapes, each having dimensions of between approximately 10 to approximately 150 microns; and
a lens (110) adapted to cover a display (104) for said electronic device (100), and
an evaluation table (502) for receiving said lens (110), said table (502) having a mounting area for said evaluation device, said evaluation table (502) being arranged to position said evaluation device relative to said lens (110) to enable the substrate (300) to be viewed through said lens (110),
whereby, if said substrate (300) is held relative to said lens (110) to enable said pattern (320) to be viewed through said lens (110) by an evaluator, a distortion in said pattern (320) viewed through said lens (110) is indicative of an imperfection in said lens (110).

2. The evaluation system of claim 1, wherein the substrate is a sheet approximately 10 cm by 16 cm.

3. The evaluation system of claim 1 or claim 2, wherein the pattern has exterior dimensions of approximately 9 cm by 14 cm.

4. The evaluation system of any of claims 1 to 3, wherein said evaluation table (502) further comprises:
a light (512) mounted within said table (502) to provide backlighting for said substrate (300); and
a guide rail system (506) for said lens (110) to place said lens (110) above said mounting area.

5. The evaluation system of any one of claims 1 to 4, further comprising a conveyor for said lens to selectively transport said lens to and from said mounting area.

6. A method for evaluating a lens (110) for a display (104) for an electronic device (100) for imperfections through a visual inspection by an evaluator, said method comprising:
placing the lens (110) under evaluation on, or holding the lens (110) under evaluation over, a substrate (300) being one of a clear mylar sheet, a rigid piece of glass, or a clear or bright piece of plastic, and having a pattern (320) imposed on the substrate (300);
placing said substrate (300) relative to said lens (110) to enable said pattern (320) to be viewed through said lens (110);
examining an image of the pattern (320) appearing through the lens (110) for a distortion in said pattern; and
identifying said lens (110) as defective if said distortion is found,
**characterised in that**:
said pattern appears to be a grey background on the substrate when viewed with an unaided eye or through said lens (110) when no noteable imperfection exists in said lens (110); and
said distortion appears to be a moiré distortion pattern when viewed through said lens (110).

7. The method of claim 6, wherein
said pattern (320) is a series of lines show in a dark colour, said lines being approximately 50 microns trick, spaced in approximately 100 micron intervals from center to center.

8. The method of claim 6, wherein said pattern (320) is a gid having lines shown in a dark colour having thickness of between approximately 10 to approximately 150 microns, spaced in intervals between approximately 20 microns to approximately 300 microns from center to center.

9. The method of claim 6, wherein said pattern (320) is a series of geometric shapes, each having dimensions of between approximately 10 to approximately 150 microns.

10. The method of any one of claims 6 to 9, wherein the substrate is a sheet approximately 10 cm by 16 cm.

11. The method of any one of claims 6 to 10, wherein the pattern has exterior dimensions of approximately 9 cm by 14 cm.

12. The method of any one of claims 6 to 11, wherein a backlight is used to illuminate said substrate.

13. A method of manufacturing an electronic device (100) having a lens (110) for a display (104) of the device (100), the method comprising:
evaluating the lens (110) using a method as claimed in any one of claims 6 to 12; and
if said lens (110) is evaluated as having no imperfections, assembling said lens (110) with said electronic device (100).

## Patentansprüche

1. Evaluierungssystem zum visuellen Identifizieren von Imperfektionen bzw. Fehlern von Komponenten einer elektronischen Vorrichtung (100), wobei das Evaluierungssystem aufweist:
eine Evaluierungsvorrichtung, die aufweist:
ein Substrat (300), das eines ist aus einer durchsichtigen Mylar-Schicht, einem unelastischen Glasstück oder einem durchsichtigen Plastikstück; und
ein Muster (320), das auf dem Substrat aufgebracht ist, wobei das Muster (320) als ein grauer Hintergrund auf dem Substrat erscheint, wenn mit bloßem Auge oder durch die Linse (110) betrachtet, wenn keine beachtenswerte Imperfektion in der Linse (110) existiert, und als ein Moire-Verzerrungsmuster erscheint, wenn durch die Linse (110) betrachtet, wenn die Linse (110) fehlerhaft ist, und wobei das Muster eines ist aus:
eine Serie von Linien in dunkler Farbe; wobei die Linien ungefähr 50 Mikrometer dick sind und in Intervallen von ungefähr 100 Mikrometern von Mitte zu Mitte beabstandet sind;
ein Gitter mit Linien in dunkler Farbe, die eine Dicke haben von zwischen ungefähr 10 bis ungefähr 150 Mikrometern und in Intervallen zwischen ungefähr 20 Mikrometern bis ungefähr 300 Mikrometern von Mitte zu Mitte beabstandet sind; oder
eine Serie von geometrischen Formen, die jeweils Dimensionen haben von zwischen ungefähr 10 Mikrometern bis ungefähr 150 Mikrometern; und
eine Linse (110), die ausgebildet ist, eine Anzeige (104) für die elektronische Vorrichtung (100) abzudecken, und
eine Evaluierungstafel (502) zur Aufnahme der Linse (110), wobei die Tafel (502) einen Anbringungsbereich für die Evaluierungsvorrichtung hat, wobei die Evaluierungstafel (502) ausgebildet ist, die Evaluierungsvorrichtung relativ zu der Linse (110) zu positionieren, um eine Betrachtung des Substrats (300) durch die Linse (110) zu ermöglichen, wodurch, wenn das Substrat (300) relativ zu der Linse (110) gehalten wird, um eine Betrachtung des Musters (320) durch die Linse (110) durch einen Evaluator zu ermöglichen, eine Verzerrung in dem durch die Linse (110) betrachteten Muster (320) eine Imperfektion in der Linse (110) anzeigt.

2. Evaluierungssystem gemäß Anspruch 1, wobei das Substrat eine Schicht von ungefähr 10 cm mal 16 cm ist.

3. Evaluierungssystem gemäß Anspruch 1 oder Anspruch 2, wobei das Muster äußere Abmessungen von ungefähr 9 cm mal 14 cm hat.

4. Evaluierungssystem gemäß einem der Ansprüche 1 bis 3, wobei die Evaluierungstafel (502) weiter aufweist:
ein Licht (512), das in der Tafel (502) angebracht ist, um eine Hintergrundbeleuchtung für das Substrat (300) vorzusehen; und
ein Führungssystem (506) für die Linse (110), um die Linse (110) über dem Anbringungsbereich zu platzieren.

5. Evaluierungssystem gemäß einem der Ansprüche 1 bis 4, das weiter aufweist eine Beförderungsvorrichtung für die Linse, um die Linse zu dem und von dem Anbringungsbereich zu transportieren.

6. Verfahren zum Evaluieren einer Linse (110) für eine Anzeige (104) für eine elektronische Vorrichtung (100) auf Imperfektionen durch eine visuelle Inspektion durch einen Evaluator, wobei das Verfahren aufweist:
Platzieren der zu evaluierenden Linse (110) auf ein oder Halten der zu evaluierenden Linse (110) über ein Substrat (300), das eines ist aus einer durchsichtigen Mylar-Schicht, einem unelastischen Glasstück oder einem durchsichtigen Plastikstück, und ein Muster (320) hat, das auf dem Substrat (300) aufgebracht ist;
Platzieren des Substrats (300) relativ zu der Linse (110), um zu ermöglichen, dass das Muster (320) durch die Linse (110) betrachtet wird; Untersuchen eines Bildes des Musters (320), das durch die Linse (110) erscheint, auf eine Verzerrung in dem Muster; und
Identifizieren der Linse (110) als fehlerhaft, wenn die Verzerrung zu finden ist, **dadurch gekennzeichnet, dass**:
das Muster als ein grauer Hintergrund auf dem Substrat erscheint, wenn mit bloßem Auge oder durch die Linse (110) betrachtet, wenn keine beachtenswerte Imperfektion in der Linse (110) existiert; und
die Verzerrung als ein Moirä-Verzerrungsmuster erscheint, wenn durch die Linse (110) betrachtet.

7. Verfahren gemäß Anspruch 6, wobei
das Muster (320) eine Serie von Linien in dunkler Farbe ist; wobei die Linien ungefähr 50 Mikrometer dick sind und in Intervallen von ungefähr 100 Mikrometern von Mitte zu Mitte beabstandet sind.

8. Verfahren gemäß Anspruch 6, wobei das Muster (320) ein Gitter ist mit Linien in dunkler Farbe, die eine Dicke haben von zwischen ungefähr 10 bis ungefähr 150 Mikrometern und in Intervallen zwischen ungefähr 20 Mikrometern bis ungefähr 300 Mikrometern von Mitte zu Mitte beabstandet sind.

9. Verfahren gemäß Anspruch 6, wobei das Muster (320) eine Serie von geometrischen Formen ist, die jeweils Dimensionen haben von zwischen ungefähr 10 Mikrometern bis ungefähr 150 Mikrometern.

10. Verfahren gemäß einem der Ansprüche 6 bis 9, wobei das Substrat eine Schicht von ungefähr 10 cm mal 16 cm ist.

11. Verfahren gemäß einem der Ansprüche 6 bis 10, wobei das Muster äußere Abmessungen von ungefähr 9 cm mal 14 cm hat.

12. Verfahren gemäß einem der Ansprüche 6 bis 11, wobei eine Hintergrundbeleuchtung verwendet wird, um das Substrat zu beleuchten.

13. Verfahren zur Herstellung einer elektronischen Vorrichtung (100) mit einer Linse (110) für eine Anzeige (104) der Vorrichtung (100), wobei das Verfahren aufweist:
Evaluieren der der Linse (110) unter Verwendung eines Verfahrens gemäß einem der Ansprüche 6 bis 12; und
wenn die Linse (110) als ohne Imperfektionen evaluiert wird, Zusammenbauen der Linse (110) mit der elektronischen Vorrichtung (100).

## Revendications

1. Système d'évaluation destiné à identifier visuellement des imperfections de composants d'un dispositif électronique (100), ledit système d'évaluation comprenant :
un dispositif d'évaluation, comprenant :
un substrat (300), celui-ci étant l'un des suivants : feuille de Mylar transparente, morceau de verre rigide ou morceau de plastique transparent ou brillant ; et
un motif (320) appliqué sur le substrat (300), ledit motif (320) apparaissant constituer un arrière-plan gris sur le substrat lorsqu'il est observé à l'oeil nu ou au travers de ladite lentille (110) lorsqu'aucune imperfection notable n'existe dans ladite lentille (110) et apparaissant constituer un motif de distorsion moiré lorsqu'il est observé au travers de ladite lentille (110) lorsque ladite lentille (110) est défectueuse, ledit motif étant l'un des suivantes :
une série de lignes tracées dans une couleur foncée, lesdites lignes faisant environ 50 microns d'épaisseur et étant séparées par des intervalles d'environ 100 microns de centre à centre ;
une grille faite de lignes tracées dans une couleur foncée, d'une épaisseur comprise entre environ 10 et environ 150 microns, séparées par des intervalles compris entre environ 20 et environ 300 microns de centre à centre ; ou
une série de formes géométriques, chacune ayant des dimensions comprises entre environ 10 et environ 150 microns ; et
une lentille (110) conçue pour couvrir un écran d'affichage (104) dudit dispositif électronique (100) ; et
une table d'évaluation (502) destinée à recevoir ladite lentille (110), ladite table (502) ayant une zone de montage pour ledit dispositif d'évaluation, ladite table d'évaluation (502) étant agencée pour positionner ledit dispositif d'évaluation par rapport à ladite lentille (110) de manière à permettre d'observer le substrat (300) au travers de ladite lentille (110) ;
dans lequel, si ledit substrat (300) est placé par rapport à ladite lentille (110) de manière à permettre à un évaluateur d'observer ledit motif (320) au travers de ladite lentille (110), une distorsion dudit motif (320) observé au travers de ladite lentille (110) indique une imperfection de ladite lentille (110).

2. Système d'évaluation selon la revendication 1, dans lequel le substrat est une feuille d'environ 10 cm par 16 cm.

3. Système d'évaluation selon la revendication 1 ou la revendication 2, dans lequel le motif a des dimensions extérieures d'environ 9 cm par 14 cm.

4. Système d'évaluation selon l'une quelconque des revendications 1 à 3, dans lequel ladite table d'évaluation (502) comprend en outre :
une lampe (512) montée à l'intérieur de la table (502) pour assurer un rétroéclairage dudit substrat (300) ; et
un système de rails de guidage (506) pour ladite lentille (110), destiné à placer ladite lentille (110) au-dessus de ladite zone de montage.

5. Système d'évaluation selon l'une quelconque des revendications 1 à 4, comprenant en outre un convoyeur pour ladite lentille, destiné à transporter sélectivement ladite lentille vers ladite zone de montage et depuis celle-ci.

6. Procédé d'évaluation des imperfections d'une lentille (110), destinée à l'écran d'affichage (104) d'un dispositif électronique (100), sous la forme d'une inspection visuelle par un évaluateur, ledit procédé comprenant les étapes consistant à :
placer la lentille (110) évaluée sur un substrat (300) ou tenir la lentille (110) évaluée au-dessus d'un substrat (300), celui-ci étant une feuille de Mylar transparente, un morceau de verre rigide ou un morceau de plastique transparent ou brillant et portant un motif (320) appliqué sur le substrat (300) ;
placer ledit substrat (300) par rapport à ladite lentille (110) de manière à permettre d'observer ledit motif (320) au travers de ladite lentille (110) ;
examiner une image du motif (320) apparaissant au travers de la lentille (110) en cherchant une distorsion dans ledit motif ; et
identifier ladite lentille (110) comme défectueuse si ladite distorsion est trouvée ;
**caractérisé en ce** qui :
ledit motif apparaît constituer un arrière-plan gris sur le substrat lorsqu'il est observé à l'oeil nu ou au travers de ladite lentille (110) lorsqu'aucune imperfection notable n'existe dans ladite lentille (110) ; et
ladite distorsion apparaît constituer un motif de distorsion moiré lorsqu'il est observé au travers de ladite lentille (110).

7. Procédé selon la revendication 6, dans lequel ledit motif (320) est une série de lignes tracées dans une couleur foncée, lesdites lignes faisant environ 50 microns d'épaisseur et étant séparées par des intervalles d'environ 100 microns de centre à centre.

8. Procédé selon la revendication 6, dans lequel ledit motif (320) est une grille faite de lignes tracées dans une couleur foncée, d'une épaisseur comprise entre environ 10 et environ 150 microns, séparées par des intervalles compris entre environ 20 et environ 300 microns de centre à centre.

9. Procédé selon la revendication 6, dans lequel ledit motif (320) est une série de formes géométriques, chacune ayant des dimensions comprises entre environ 10 et environ 150 microns.

10. Procédé selon l'une quelconque des revendications 6 à 9, dans lequel le substrat est une feuille d'environ 10 cm par 16 cm.

11. Procédé selon l'une quelconque des revendications 6 à 10, dans lequel le motif a des dimensions extérieures d'environ 9 cm par 14 cm.

12. Procédé selon l'une quelconque des revendications 6 à 11, dans lequel un rétroéclairage est utilisé pour éclairer ledit substrat.

13. Procédé de fabrication d'un dispositif électronique (100) possédant une lentille (110) pour un écran d'affichage (104) du dispositif (100), le procédé comprenant les étapes consistant à :
évaluer la lentille (110) à l'aide d'un procédé selon l'une quelconque des revendications 6 à 12 ; et
si ladite lentille (110) est évaluée comme n'ayant pas d'imperfections, assembler ladite lentille (110) avec ledit dispositif électronique (100).
